# EUROPÄISCHE PATENTSCHRIFT

(11) **EP 1 014 374 B1**
(45) Veröffentlichungstag und Bekanntmachung des Hinweises auf die Patenterteilung: **05.04.2006**
(21) Anmeldenummer: 99123554.0
(22) Anmeldetag: 26.11.1999
(51) Int. Cl.: G11B 33/04

(54) **Verschliessbare Aufbewahrungskassette für eine kreisförmige Informationsplatte, insbesondere eine digitale Informationen speichernde Compact Disc**
Closable storage container for circular informationcarrier, especially a Compact Disc storing digital information
Conteneur pour stockage d'un disque circulaire, contenant de l'information, qui peut être fermé, spécialement pour un disque compact contenant de l'information numérique

(30) Priorität: 21.12.1998 EP 98124175
(43) Veröffentlichungstag der Anmeldung: 28.06.2000
(73) Patentinhaber: CARTONNERIES DE THULIN S.A., B-7350 Thulin (BE)
(72) Erfinder: Lammerant, Henri, B-7350 Thulin (BE); Lammerant, Filip, B-7350 Thulin (BE)
(74) Vertreter: Christophersen & Partner

(56) Entgegenhaltungen:
- EP-A- 0 252 226
- FR-A- 2 729 248

## Beschreibung

Die Erfindung betrifft eine verschließbare Aufbewahrungskassette für eine kreisförmige Informationsplatte, insbesondere eine digitale Informationen speichernde Compact Disc, mit in dem Innenraum der Aufbewahrungskassette angeordneten Halteelementen für die Informationsplatte, wobei die Halteelemente die Informationsplatte an einem daran konzentrisch ausgebildeten Rand halten, wobei sämtliche Halteelemente um den kreisförmigen äußeren Rand der Informationsplatte herum angeordnet sind, und wobei die Halteelemente dafür geeignet sind, eine von außen nach innen gerichtete Haltekraft auf den Rand auszuüben.

Aufbewahrungskassetten für sogenannte Compact Discs sind bereits in vielen Größen und Ausführungsformen bekannt und auf dem Markt weit verbreitet. Die Befestigung der Informationsplatten erfolgt in der Regel auf einem aus Kunststoff bestehenden Träger, der in seiner Mitte mit einer Mehrzahl kreisförmig angeordneter Klemmelemente versehen ist, die in ein mittig in der Informationsplatte angeordnetes Loch eingreifen und auf diese Weise die Informationsplatte an dem Träger festhalten. Zu diesem Zweck sind die Klemmelemente federnd ausgebildet, so daß sie eine von innen nach außen gerichtete Haltekraft auf den das zentrale Loch der Informationsplatte umgebenden Rand ausüben.

Diese Befestigungstechnik hat sich seit langer Zeit bewährt, sie wird sowohl bei Aufbewahrungskassetten für nur eine Informationsplatte, als auch bei Zweifach oder Mehrfach-Kassetten angewandt.

Derzeit in der Entwicklung befindet sich eine neue Generation von Compact Discs, bei der die Besetzung der Platte mit den digitalen Informationen anders erfolgt, als bei den bisherigen, vor allem auf dem Musiksektor weit verbreiteten Compact Discs. Die Compact Discs der neuen Generation setzen sich aus zwei identisch gestalteten Scheiben zusammen, die fest miteinander verbunden sind. Infolge dieses zweischichtigen Aufbaus der neuen Compact Discs kann es bei häufigem Einsetzen und wieder Herausnehmen aus den bekannten Trägern zu Beschädigungen an dem Rand des zentralen Lochs der Compact Disc kommen, und zwar vor allem an jener Stelle, an der die beiden Plattenhälften aneinanderstoßen. Diese Stoßflächen sind nur in den seltensten Fällen glattflächig, meistens sind dort kleine Unebenheiten oder Grate vorhanden, die beim Abnehmen von dem Träger an den federnden Klemmelementen des Trägers entlangstreifen, wodurch dann jedoch eine hohe mechanische Belastung des inneren Randes der Compact Disc eintritt.

Aus der FR 2 729 248 A1 ist eine Aufbewahrungskassette bekannt, bei der die Halteelemente um den kreisförmigen Rand der Informationsplatte herum angeordnet sind, wobei die direkt an der Bodenplatte der Aufbewahrungskassette angeformten Halteelemente dazu geeignet sind, eine von außen nach innen gerichtete Haltekraft auf den Rand auszuüben, wodurch sich das Risiko von Beschädigungen des zentralen Lochs der Informationsplatte reduziert. Nachteilig bei dieser Art von Aufbewahrungskassetten hat sich allerdings erwiesen, daß die auf der Bodenplatte angeordneten Halteelemente eine Nutzung der Bodenplatte für andere Anwendungen behindern.

Ausgehend von diesem Stand der Technik liegt der Erfindung die **Aufgabe** zugrunde, eine verschließbare Aufbewahrungskassette für eine kreisförmige Informationsplatte zu schaffen, die sich durch ein schonenderes Festhalten auch empfindlicher Informationsplatten auszeichnet, und gleichzeitig eine verbesserte Nutzung der über der Bodenplatte zur Verfügung stehenden Raumes erlaubt.

Zur **Lösung** wird bei einer Aufbewahrungskassette der eingangs genannten Art vorgeschlagen, dass diese durch ein die Informationsplatte aufnehmendes Basisteil und ein Deckelteil zum Verschließen der Kassette gekennzeichnet ist, wobei das Basisteil über eine rechteckige Bodenplatte und von der Bodenplatte in Richtung auf das Deckelteil abstehende Wände verfügt, an denen die Halteelemente über Konsolen angeformt sind, die sich, ausgehend von der jeweiligen Wand, bis über die Bodenplatte erstrecken.

Erfindungsgemäß erfolgt das Halten der Compact Disc an dem Träger nicht entlang des inneren, das zentrale Loch umgebenden Randes, sondern entlang des kreisförmigen äußeren Randes der Informationsplatte. Dort kann es insbesondere bei aus zwei Einzelscheiben zusammengesetzten Informationsplatten weniger zu Beschädigungen der Informationsplatte kommen, als bei der Verwendung von Halteelementen im Bereich des inneren, zentralen Loches der Informationsplatte. Weiter ergibt sich der Vorteil, daß die rechteckige Bodenplatte frei von irgendwelchen Funktionsteilen ist und damit für andere Nutzungen zur Verfügung steht. Eine solche Nutzung kann z.B. in der Unterbringung eines Informationsblattes oder Begleitheftes liegen. Hierzu wird mit einer bevorzugten Ausgestaltung vorgeschlagen, daß die Konsolen mit den Halteelementen im Abstand von der Oberseite der Bodenplatte angeordnet sind, und daß dieser Abstand Teil eines rechteckigen Freiraums für ein Informationsblatt und/oder ein Begleitheft ist.

Vorzugsweise wird die von außen nach innen gerichtete Haltekraft durch Zentrierflächen an den Halteelementen ausgeübt, wobei die Zentrierflächen die Gestalt eines Kreissegments haben, dessen Krümmung gleich der Krümmung des Randes der Informationsplatte ist. Erreicht wird auf diese Weise eine relativ große Berührungsfläche mit geringer spezifischer Druckbelastung und damit eine schonende Anlage des äußeren Randes der Informationsplatte an den Zentrierflächen der Halteelemente. Es ist, anders als bei den bekannten Aufbewahrungskassetten, bei denen die Informationsplatte im Bereich ihres zentralen Loches gehalten wird, nicht erforderlich, die Halteelemente gleichmäßig über den Umfang zu verteilen. Vielmehr können die Halteelemente so angeordnet werden, daß sich diese nur im Bereich von zwei Rändern der Aufbewahrungskassette befinden, so daß die übrigen Bereiche des äußeren Randes der Informationsplatte frei von Haltemitteln und auf diese Weise gut von Hand greifbar sind.

Um Beeinträchtigungen der Lesbarkeit der auf der Informationsplatte gespeicherten digitalen Informationen infolge einer mechanischen Verletzung der Flachseiten der Informationsplatte zu vermeiden, wird mit einer Ausgestaltung der Aufbewahrungskassette vorgeschlagen, daß an den Halteelementen parallel zu der Informationsplatte sich erstreckende Stützflächen ausgebildet sind, auf denen die Informationsplatte mit dem Rand ihrer einen Flachseite aufliegt. Die Abstützung der Informationsplatte erfolgt also ausschließlich an deren Rand, wohingegen sämtliche übrigen Bereiche der Flachseite keine Berührung mit der Aufbewahrungskassette haben, so daß sich insgesamt eine sehr schonende Lagerung der Informationsplatte in der Kassette ergibt.

Zu der schonenden Lagerung trägt ferner bei, daß die Stützflächen die Gestalt eines gebogenen Kreissegments haben, dessen Biegung im wesentlichen gleich der Krümmung des Randes der Informationsplatte ist. Insbesondere können daher sowohl die Zentrierflächen, als auch die Stützflächen eine Kreissegmentform aufweisen und damit eine relativ großflächige Berührung mit der Informationsplatte, ohne daß die Gefahr einer Verletzung der Informationsplatte in den räumlichen Bereichen der darauf abgespeicherten digitalen Informationen besteht. Es hat sich hierzu als günstig herausgestellt, wenn die kreissegmentförmigen Stützflächen eine Breite aufweisen, die klein ist im Vergleich zum Radius der Informationsplatte, vorzugsweise eine Breite von 1mm bis 2,5 mm bei einem Radius der Informationsplatte von ca. 60 mm. Auf diese Weise berühren die Stützflächen der Halteelemente die Informationsplatte nur in jenem schmalen Randbereich, in dem sich keine digitale Information befindet.

Infolge der großen freien Fläche der Bodenplatte kann gemäß einer Weiterbildung der Aufbewahrungskassette der Freiraum durch die Wände des Basisteils begrenzt sein und in Richtung der Haupterstreckung der Konsolen so groß sein wie der Durchmesser der Informationsplatte, und in Richtung quer hierzu größer sein als der Durchmesser der Informationsplatte.

Mit der Erfindung wird ferner vorgeschlagen, daß sich das Deckelteil aus einer Deckelplatte und Seitenwänden entlang zumindest eines Teils der Ränder der Deckelplatte zusammensetzt, und daß an zumindest zwei einander gegenüberliegenden Seitenwänden Laschen angeformt sind, zwischen denen und der Innenfläche der Deckelplatte ein Informationsblatt und/oder ein Begleitheft einsetzbar ist, dessen Größe gleich der Größe der gesamten Kassette abzüglich der Dicke der Seitenwände ist.

Mit der Erfindung wird ferner vorgeschlagen, daß das Basisteil und das hierzu über ein Scharnier verschwenkbare Deckelteil zum Verschließen mit ineinandergreifenden Rastmitteln versehen sind, und daß sich die Rastmittel im Bereich der Mitte jenes Randes der Aufbewahrungskassette befinden, der der Scharnierseite gegenüberliegt.

Eine bevorzugte Ausgestaltung der Aufbewahrungskassette ist gekennzeichnet durch ein zusätzliches Haltemittel, welches bis über mindestens den Rand der Informationsplatte vorspringt. Durch dieses Haltemittel wird die Informationsplatte gegen ein Abheben nach oben, d. h. zu dem Deckelteil hin, gesichert. Vorzugsweise ist das zusätzliche Haltemittel räumlich getrennt von der Anordnung der Halteelemente.

Bevorzugt wird ferner eine Ausgestaltung der Aufbewahrungskassette, bei der an dem dem Haltemittel gegenüberliegenden Umfangsabschnitt der Informationsplatte ein bis über die Informationsplatte vorspringender Haltenocken starr angeordnet ist. Gemeinsam mit dem Haltemittel sichert der Haltenocken die Informationsplatte gegen ein Abheben nach oben, d. h. zu dem Deckelteil hin. In einer bevorzugten Ausgestaltung ist der Haltenocken Teil einer Rückwand des die Informationsplatte aufnehmenden Basisteils der Aufbewahrungskassette.

Bezüglich der Gestaltung des zusätzlichen Haltemittels wird gemäß einer ersten Variante vorgeschlagen, daß das zusätzliche Haltemittel ein federndes Rastelement ist, welches am äußeren Rand der Informationsplatte angeordnet und mit einer in Richtung auf die Informationsplatte bis über die Informationsplatte vorspringenden Rastnase versehen ist, wobei sich die Rastnase mit einer nach unten gerichteten Schräge auf der Oberkante des Randes der Informationsplatte abstützt.

Gemäß einer Variante ist das zusätzliche Haltemittel eine um ein Gelenk schwenkbare Klappe, die aus einer Schließstellung, in der sich die Klappe über die Informationsplatte erstreckt, bis in eine Öffnungsstellung verschwenkbar ist, in der sich die Klappe vollständig außerhalb des Umfangs der Informationsplatte befindet. Vorzugsweise ist die Klappe kurz im Vergleich zum Durchmesser der Informationsplatte, und sie springt nur bis über einen Randbereich der Informationsplatte vor.

Gemäß einer weiteren Variante ist die das zusätzliche Haltemittel bildende Klappe länger als der Durchmesser der Informationsplatte. In diesem Fall ist die Klappe vorzugsweise mit einem runden Deckel versehen, der sich in der Schließstellung koaxial zu der Informationsplatte befindet und einen geringeren Durchmesser aufweist als die Informationsplatte.

Zwecks einfacher Realisierung des Gelenks wird ferner vorgeschlagen, als Gelenk einstückig angeformtes Filmschamier zu verwenden.

Gemäß einer weiteren Variante ist das zusätzliche Haltemittel ein in einer Ebene parallel zu der Informationsplatte zwischen zwei Endpositionen hin- Und herbewegliches Schiebestück, wobei an dem Schiebestück ein Verriegelungsabschnitt ausgebildet ist, der in der einen Endposition über den Rand der Informationsplatte vorspringt und der sich in der anderen Endposition außerhalb des Umfangs der Informationsplatte befindet. In bevorzugter Ausgestaltung ist das Schiebestück verschiebbar entlang der Rückwand oder entlang der Stirnwand des Basisteils geführt.

Mit der Erfindung wird schließlich vorgeschlagen, daß das Basisteil aus Polyethylenterephthalat besteht.

Der Vorteil dieses Materials besteht darin, daß sich dieses bei entsprechend geringem Material biegen läßt, so daß unmittelbar an dem Basisteil Gelenke in Gestalt von Filmschamieren einstückig angeformt werden können.

Die erfindungsgemäße Aufbewahrungskassette wird nachfolgend anhand von Ausführungsbeispielen erläutert, wobei auf die Zeichnungen Bezug genommen wird. Darin zeigen:
- Fig. 1: eine erste Ausführungsform einer aus einem Basisteil und einem Deckelteil bestehenden Aufbewahrungskassette in teilweise geöffnetem Zustand;
- Fig.2: die Aufbewahrungskassette nach Fig. 1 mit einer darin eingesetzten Compact Disc sowie schriftlichen Begleitrnaterialien;
- Fig. 3: die Aufbewahrungskassette nach Fig. 2 in geschlossenem Zustand;
- Fig. 4: eine Draufsicht auf die geschlossene Aufbewahrungskassette;
- Fig. 5: in vergrößerter Detaildarstellung einen Schnitt in der in Fig. 4 eingezeichneten Ebene V-V;
- Fig. 6: in vergrößerter Detaildarstellung einen Schnitt in der in Fig. 4 eingezeichneten Ebene VI-VI;
- Fig. 7: in vergrößerter Detaildarstellung einen Schnitt in der in Fig. 4 eingezeichneten Ebene VII-VII;
- Fig. 8: in vergrößerter Detaildarstellung einen Schnitt in der in Fig. 4 eingezeichneten Ebene VIII-VIII;
- Fig. 9: in vergrößerter Detaildarstellung einen Schnitt in der in Fig. 4 eingezeichneten Ebene IX-IX;
- Fig. 10: eine Draufsicht auf das Basisteil der Aufbewahrungskassette;
- Fig. 11: einen Schnitt durch das Basisteil in der in Fig. 10 eingezeichneten Ebene XI-XI;
- Fig. 12: einen Schnitt durch das Basisteil in der in Fig. 10 eingezeichneten Ebene XII-XII;
- Fig. 13: eine zweite Ausführungsform einer Aufbewahrungskassette in einem Detailschnitt, dessen Lage Fig. 7 der ersten Ausführungsform entspricht;
- Fig. 14: einen Schnitt durch die Symmetrieachse eines Basisteils der Aufbewahrungskassette in einer dritten Ausführungsform;
- Fig. 15: eine Draufsicht auf ein Basisteil der Aufbewahrungskassette in einer vierten Ausführungsform;
- Fig. 16: einen Schnitt durch das Basisteil entlang der in Figur 15 eingezeichneten Symmetrieachse XVI - XVI;
- Fig. 17: in vergrößerter und stark verkürzter Detaildarstellung einen der Fig. 16 entsprechenden Schnitt;
- Fig. 18: eine Draufsicht auf ein Basisteil der Aufbewahrungskassette in einer fünften Ausführungsform und
- Fig. 19: in vergrößerter Detaildarstellung einen Schnitt entlang der in Figur 18 eingezeichneten Ebene XIX - XIX.

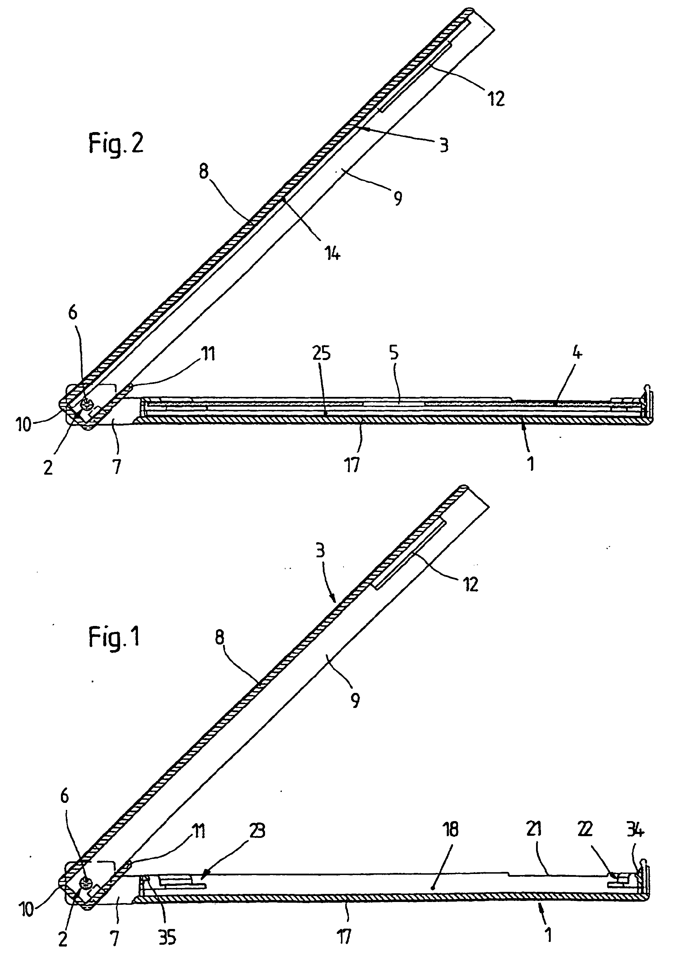

Die Fig. 1 bis 3 zeigen jeweils in geschnittener Seitenansicht die Aufbewahrungskassette für eine Informationsplatte und insbesondere eine Compact Disc. Die Aufbewahrungskassette setzt sich aus einem Basisteil 1 und einem über ein Scharnier 2 schwenkbar daran angelenkten Deckelteil 3 zusammen. Basisteil 1 und Deckelteil 3 bestehen jeweils aus Kunststoff, der vorzugsweise transparent ist. Ein geeigneter Werkstoff ist z. B. Polypropylen. In das Basisteil 1 läßt sich die Informationsplatte 4 einsetzen, wozu das Basisteil 1 mit im folgenden noch näher beschriebenen Haltemitteln versehen ist, die einstückig an dem Basisteil 1 angeformt sind. Zu diesem Zweck werden vorzugsweise sowohl Basisteil 1, als auch Deckelteil 3 im Kunststoff-Spritzgußverfahren hergestellt.

Die Informationsplatte 4 ist kreisrund und in ihrem Zentrum aus technischen Gründen mit einem kreisrunden Loch 5 versehen. Auf der Informationsplatte 4 sind digitale Informationen abgespeichert.

Das Scharnier 2 wird durch zwei Stifte 6 gebildet, die an nach außen weisenden Stegen 7 des Basisteils 1 angeformt sind. Die Stifte 6 ragen in entsprechende Öffnungen in Seitenwänden des Deckelteils 3.

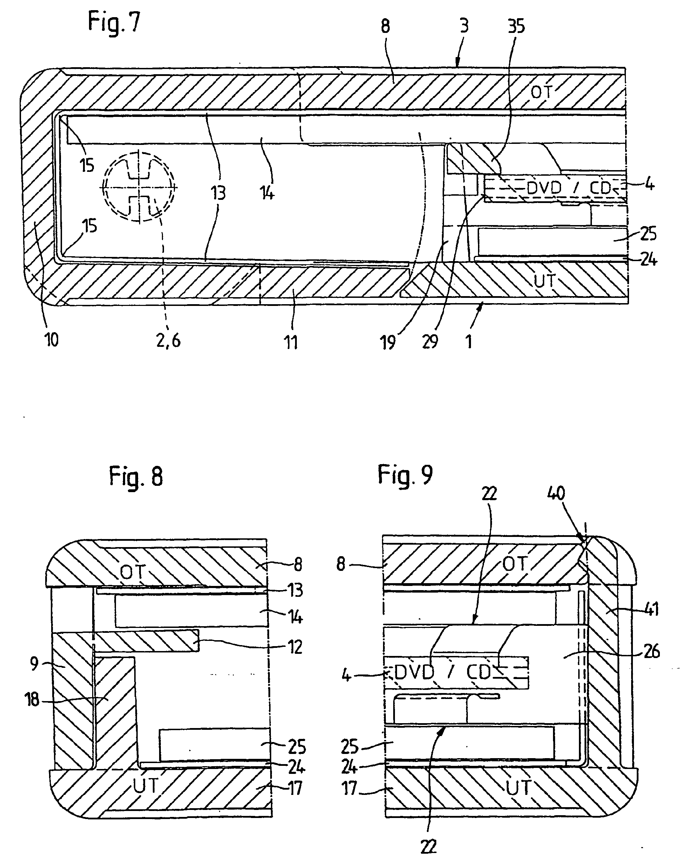

Das Deckelteil 3 setzt sich aus einer flachen und ebenen Deckelplatte 8, zwei Seitenwänden 9 und einer Rückwand 10 zusammen. An die Rückwand 10 wiederum schließt sich eine untere Wand 11 an, die bereits wieder parallel zu der Deckelplatte 8 verläuft. Bei geschlossener Aufbewahrungskassette schließt sich diese untere Wand 11 bündig an den Boden der Aufbewahrungskassette an. Im Querschnitt betrachtet, bilden daher Deckelplatte 8, Rückwand 10 und untere Wand 11 eine U-förmige Struktur, durch die zudem die Achse des Scharniers 2 hindurchläuft. Entlang des der Rückwand 10 gegenüberliegenden Randes des Deckelteils 3 ist keine Wand vorhanden. Auf diese Weise läßt sich von dort aus ein Informationsblatt unter die Deckelplatte 8 einschieben. Das Informationsblatt wird durch Laschen 12 gehalten, die in den Seitenwänden 9 ausgeformt sind. Der Abstand zwischen den Laschen 12 und der Unterseite der Deckelplatte 8 ist zudem so groß, daß zusätzlich zu dem Informationsblatt 13 auch noch ein Begleitheft 14 eingeschoben werden kann. Informationsblatt 13 und Begleitheft 14 sind besonders gut in Fig. 7 zu erkennen. Darin ist auch erkennbar, daß das Informationsblatt 13 im Bereich der Achse des Scharniers dieselbe U-förmige Gestaltung aufweist, wie der dortige Übergang zwischen Deckelplatte 8, Rückwand 10 und unterer Wand 11. Zu diesem Zweck ist das Informationsblatt 13 zweimal an Knickstellen 15 abgeknickt.

Fig. 2 läßt erkennen, daß das zusätzlich über die Laschen 12 geschobene Begleitheft 14 so groß sein kann, wie die Deckelplatte 8 bzw. so groß wie das Deckelteil 3 abzüglich der Dicke der verschiedenen Seitenwände.

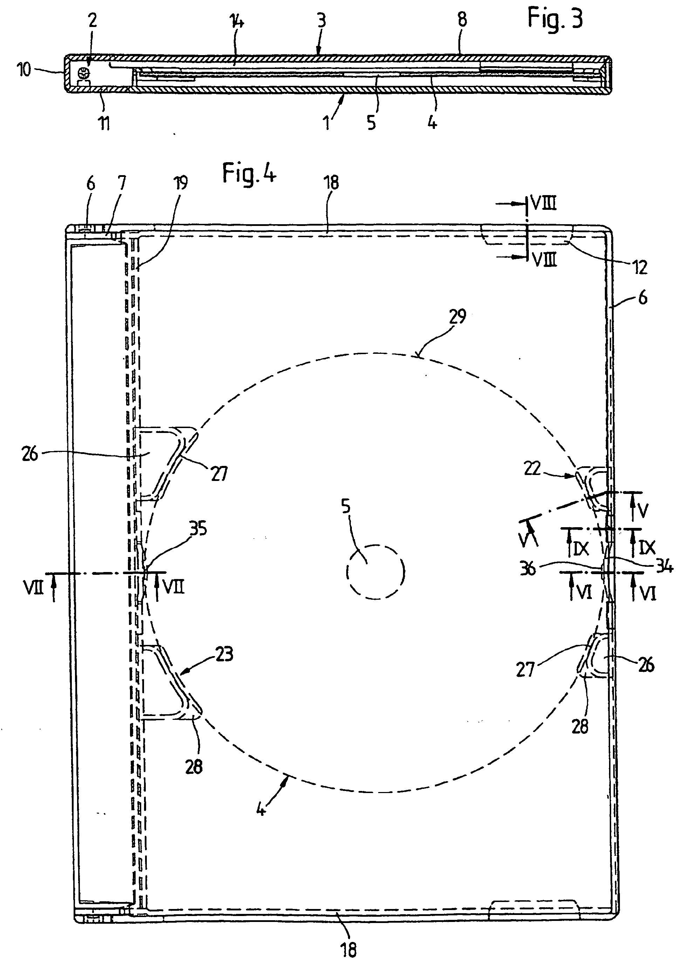

Fig. 4 zeigt eine Draufsicht auf die geschlossene Aufbewahrungskassette. Nicht sichtbare bzw. nur durch das transparente Kunststoffmaterial der Kassette hindurch sichtbare Strukturen sind gestrichelt eingezeichnet. Insgesamt weist die Kassette eine rechteckige Grundform auf mit zwei kurzen Rändern und zwei demgegenüber längeren Rändern. Bei den kürzeren Rändern handelt es sich zugleich um die beiden Seitenwände 9 des Deckelteils 3. Bei den beiden längeren Rändern handelt es sich bei dem einen um die Rückwand 10 des Deckelteils 3, wohingegen der andere längere Rand der Kassette mit einer Stirnwand 16 zusammenfällt, die jedoch nicht an dem Deckelteil, sondern an dem Basisteil 1 angeformt ist.

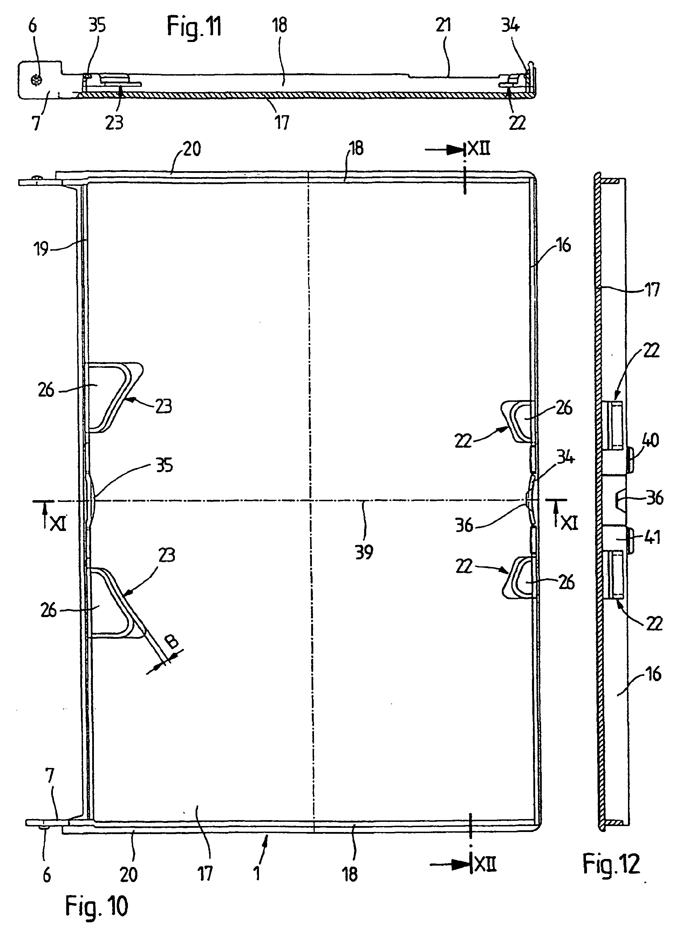

Im folgenden werden anhand der Fig. 10, 11 und 12 die wichtigsten Einzelheiten des Basisteils 1 erläutert. Dieses setzt sich aus einer rechteckigen Bodenplatte 17, der bereits erwähnten Stirnwand 16, den Seitenwänden 18 und schließlich einer Rückwand 19 zusammen. Sämtliche Wände 16, 18, 19 schließen nicht exakt mit der Außenkontur der Bodenplatte 17 ab, sondern sind geringfügig nach innen versetzt, so daß z. B. bezüglich der Seitenwand 18 ein geringer Bodenüberstand 20 bleibt. In Verlängerung der Seitenwände 18 nach außen finden sich die beiden Stege 7, an denen die Stifte 6 des Scharniers angeformt sind. Insgesamt ist daher die Bodenplatte 17 um die Länge der Stege 7 kürzer, als die Deckelplatte des Deckelteils.

Die Seitenwände 18 sind mit einer Vertiefung 21 versehen, um Platz für die in den Fig. 1 und 2 dargestellten Laschen 12 des Deckelteils 3 zu schaffen.

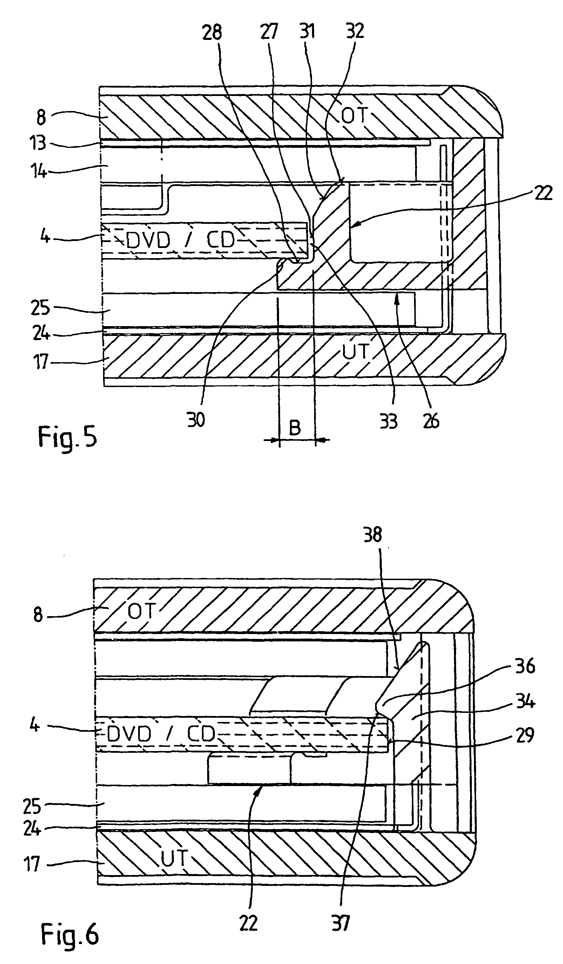

Die Bodenfläche, d. h. die Oberseite der Bodenplatte 17, ist rechteckig und frei von irgendwelchen Einbauten. Auch Halteelemente 22, 23 für die Informationsplatte, welche sich oberhalb der Bodenplatte 17 befinden, sind nicht unmittelbar mit der Bodenplatte verbunden, so daß auch insoweit keine Beeinträchtigung der freien rechteckigen Grundfläche der Bodenplatte eintritt. Auf die Bodenplatte 17 kann daher ein rechteckiges Informationsblatt oder ein rechteckiges Begleitheft gelegt werden. In den Fig. 5 bis 9 sind Informationsblatt 24 und Begleitheft 25 zu erkennen. Fig. 7 verdeutlicht darüber hinaus, daß das Begleitheft 25 auf der Bodenplatte kleiner ist, als jenes andere Begleitheft 14, welches sich unter der Deckelplatte 8 befindet. Zum Einsetzen in das Basisteil 1 müssen Informationsblatt 24 und Begleitheft 25 mit ihren beiden längeren Rändern unter die Halteelemente 22, 23 geschoben werden. In dieser Lage sind sie durch die Halteelemente 22, 23 gegen ein Herausfallen gesichert.

Die Fig. 10 bis 12 lassen ferner erkennen, daß sich die Halteelemente 22, 23 an Konsolen 26 befinden, die an der Stirnwand 16 bzw. der Rückwand 19 des Basisteils 1 einstückig angeformt sind. Die Konsolen 26 erstrecken sich daher, ausgehend von der Stirnwand 16 bzw. Rückwand 19, frei auskragend bis über die Bodenplatte 17. Die Halteelemente 22, 23 sind an dem freien Ende der Konsolen 26 angeformt.

Anhand der Detaildarstellungen Fig. 5, 6, 7, 8 und 9 werden nachfolgend Einzelheiten der Konsolen mit den Halteelementen beschrieben. Bei der Aufbewahrungskassette nach Ausführungsbeispiel sind insgesamt vier Konsolen 26 vorhanden. Zwei dieser Konsolen mit daran angeordneten Halteelementen 22 sind einstückig an der Stirnwand 16 befestigt, zwei weitere Konsolen mit daran angeordneten Halteelementen 23 an der Rückwand 19. Jede dieser Konsolen 26 ist in Draufsicht näherungsweise trapezförmig gestaltet, wie insbesondere Fig. 4 erkennen läßt. Der Informationsplatte 4 zugewandt, ist an jeder Konsole das Halteelement 22, 23 ausgebildet, wobei sich beim Ausführungsbeispiel jedes Halteelement 22, 23 aus einer Zentrierfläche 27 und einer Stützfläche 28 zusammensetzt. Die Stützfläche 28 erstreckt sich parallel zur Bodenplatte 17, wohingegen die Zentrierfläche 27 senkrecht zu der Stützfläche 28 steht. Sowohl Zentrierfläche 27, als auch Stützfläche 28 sind der Krümmung der Informationsplatte 4 an deren äußerem Rand 29 angepaßt. Hierzu weisen die Zentrierflächen 27, die aufgrund ihrer Lage und Ausrichtung eine von außen nach innen gerichtete Haltekraft auf die Informationsplatte 4 ausüben können, die Gestalt eines Kreissegments auf, dessen Krümmung gleich der Krümmung des äußeren Randes 29 der Informationsplatte 4 ist. Ebenso weisen die Stützflächen 28 die Gestalt eines gebogenen, schmalen Kreissegments auf, dessen Biegung im wesentlichen gleich der Krümmung des äußeren Randes 29 der Informationsplatte 4 ist. Die Breite B dieses gebogenen Kreissegments beträgt zwischen 1 mm und 2,5 mm, vorzugsweise 1,3 mm. Bei Einhaltung dieser Geometrie der Stützfläche 28 ist gewährleistet, daß die Informationsplatte 4 nur im Bereich ihres äußersten schmalen Randes auf der Stützfläche aufliegt und nicht in jenem Bereich, auf dem die digitale Information abgespeichert ist.

Der innere Rand der gebogenen Stützfläche 28 ist mit einer nach oben stehenden Rippe 30 versehen, auf der die Informationsplatte 4 mit ihrer Unterseite aufliegt. Die Zentrierfläche 27 setzt sich nach oben hin in einer Einführschräge 31 fort. Die Einführschräge 31 wiederum geht in eine schmale Horizontalfläche 32 über, die mit dazu beiträgt, das Begleitheft 14 zu tragen.

Zur Erzielung der erfindungsgemäßen, von außen nach innen gerichteten Haltekraft auf den Rand 29 muß die Informationsplatte 4 nicht zwischen den vertikalen Zentrierflächen 27 eingeklemmt sein, d. h. an allen vier Zentrierflächen 27 zugleich anliegen. Vielmehr kann, wie Fig. 5 erkennen läßt, dort ein schmaler Spalt 33 verbleiben. Die Zentrierflächen 27 der Halteelemente 22, 23 übemehmen daher nicht die Funktion einer Lagesicherung der Informationsplatte 4 in allen Richtungen. Vielmehr bewirken die Zentrierflächen 27 lediglich eine radiale Zentrierung der Informationsplatte 4 in Bezug auf das Basisteil der Aufbewahrungskassette.

Die Lagesicherung der Informationsplatte nach unten hin wird demgegenüber durch die Stützflächen 28 der Halteelemente 22, 23 erzielt Die Sicherung der Informationsplatte 4 gegen ein Abheben nach oben, d. h. zu dem Deckelteil 3 hin, erfolgt hingegen über ein in Fig. 6 dargestelltes Rastelement 34 sowie einen in Fig. 7 dargestellten Haltenocken 35. Rastelement 34 und Haltenocken 35 sind nicht Bestandteil der Halteelemente 22, 23. Das Rastelement 34 ist zwischen den beiden Halteelementen 22 angeordnet, ist ebenfalls Bestandteil des Basisteils der Kassette und ist infolge seiner Materialeigenschaften federnd ausgebildet. Zu der Informationsplatte 4 hin ist an dem federnden Rastelement 34 eine Rastnase 36 angeformt. Die Rastnase 36 stützt sich mit einer nach unten gerichteten Schräge 37 auf der Oberkante des Randes 29 der Informationsplatte 4 ab. Auch nach oben hin schließt sich an die Rastnase 36 eine Schräge 38 an. Beide Schrägen 37, 38 des Rastelementes 34 sind so gestaltet, daß sich das Rastelement 34 federnd nach außen biegt, wenn die Informationsplatte 4 unter gewisser Druckanwendung in die Halteelemente eingesetzt oder herausgenommen wird. Das Rastelement 34 ist exakt auf der Mittelachse 39 der Aufbewahrungskassette gegenüber dem Scharnier 2 angeordnet.

Die Fig. 4 und 10 lassen ferner erkennen, daß das federnde Rastelement 34 zugleich Teil der Stirnwand 16 des Basisteils 1 ist. Auf diese Weise wird eine raumsparende Anordnung mit geringen Wanddicken erreicht.

Ebenfalls auf der kurzen Mittellinie 39 der Aufbewahrungskassette, diesmal jedoch schamierseitig, ist als Bestandteil der dortigen Rückwand 19 des Basisteils 1 der Haltenocken 35 angeformt. Rastelement 34 und Haltenocken 35 liegen sich daher in Bezug auf die kreisrunde Informationsplatte 4 genau einander gegenüber. Im Vergleich zu dem Rastelement 34 ist der Haltenocken 35 nahezu starr, was durch eine materialschlüssige Anbindung des Haltenockens 35 an die starre Rückwand 19 des Basisteils 1 erreicht wird. Der Haltenocken 35 ragt, wie insbesondere Fig. 7 erkennen läßt, bis über den äußeren Rand 29 der Informationsplatte 4. Seine Unterseite erstreckt sich parallel zu der Informationsplatte 4, so daß der Haltenocken 35 einem nach oben gerichteten Druck der Informationsplatte 4 nicht nachgeben kann.

Die Aufbewahrungskassette ist verschließbar, wozu an dem dem Scharnier 2 gegenüberliegenden Rand der Kassette Rastmittel 40 angeordnet sind. Die Rastmittel 40 bestehen aus einer federnden Lasche 41, die Teil der Stirnwand 16 ist, sowie einer in der Deckelplatte 8 angeordneten, korrespondierenden Ausnehmung. Beim Ausführungsbeispiel sind insgesamt zwei Rastmittel 40 vorhanden, die sich zu beiden Seiten des ebenfalls federnden Rastelementes 34, zugleich jedoch zwischen den beiden starren Halteelementen 22 befinden.

Zur Entnahme der Informationsplatte 4 aus der Kassette wird zunächst das Deckelteil 3 nach oben aufgeschwenkt. Hierzu muß zunächst die Schließwirkung der Rastmittel 40, d. h. ein geringer Widerstand, überwunden werden. Sodann kann die Informationsplatte 4 in ihren freien Randbereichen ergriffen und nach oben gezogen werden, d. h. von dem Basisteil 1 weg. Einer solchen Zugbewegung kann die Informationsplatte 4 jedoch nur auf der Seite der federnd nachgebenden Rastelemente 34 folgen, während auf der gegenüberliegenden Seite der Haltenocken 35 die Informationsplatte 4 noch festhält. Dadurch gelangt die Informationsplatte zwangsläufig in eine geneigte Lage. Wird die Informationsplatte 4 in dieser geneigten Lage etwas nach außen in Richtung auf die Stirnwand 16 bewegt, löst sie sich auch von dem Haltenocken 35 und kann endgültig entnommen werden. Das Einsetzen der Informationsplatte 4 erfolgt in umgekehrter Reihenfolge.

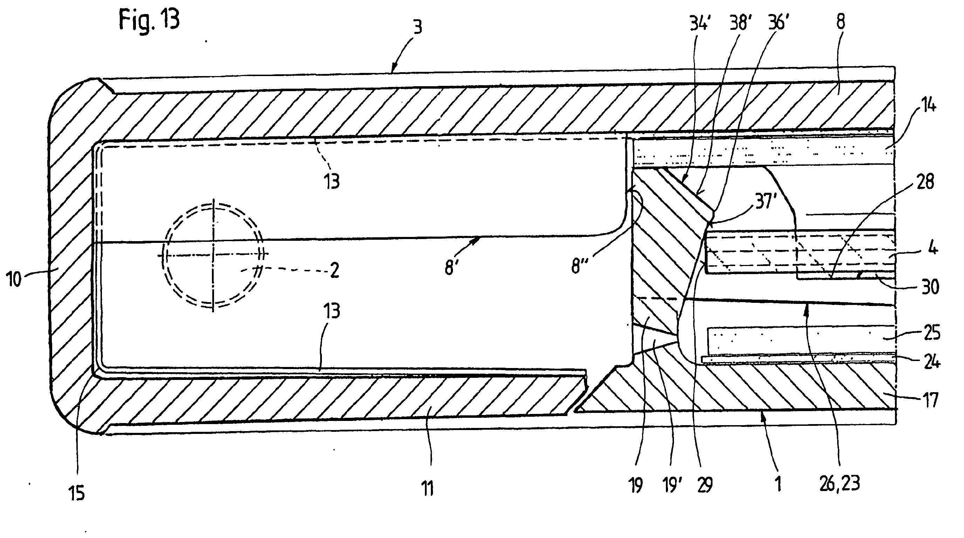

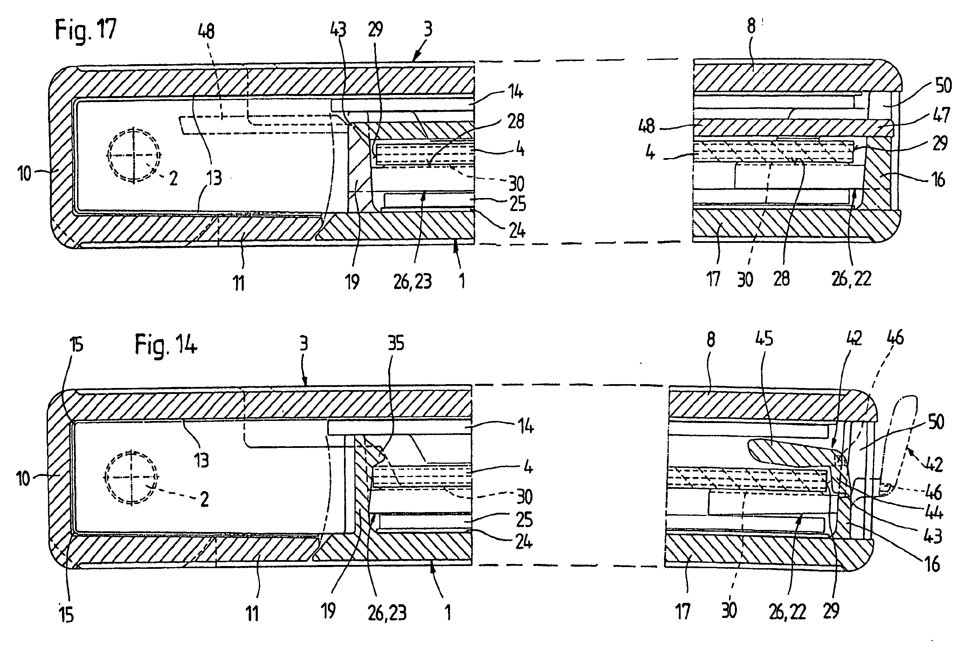

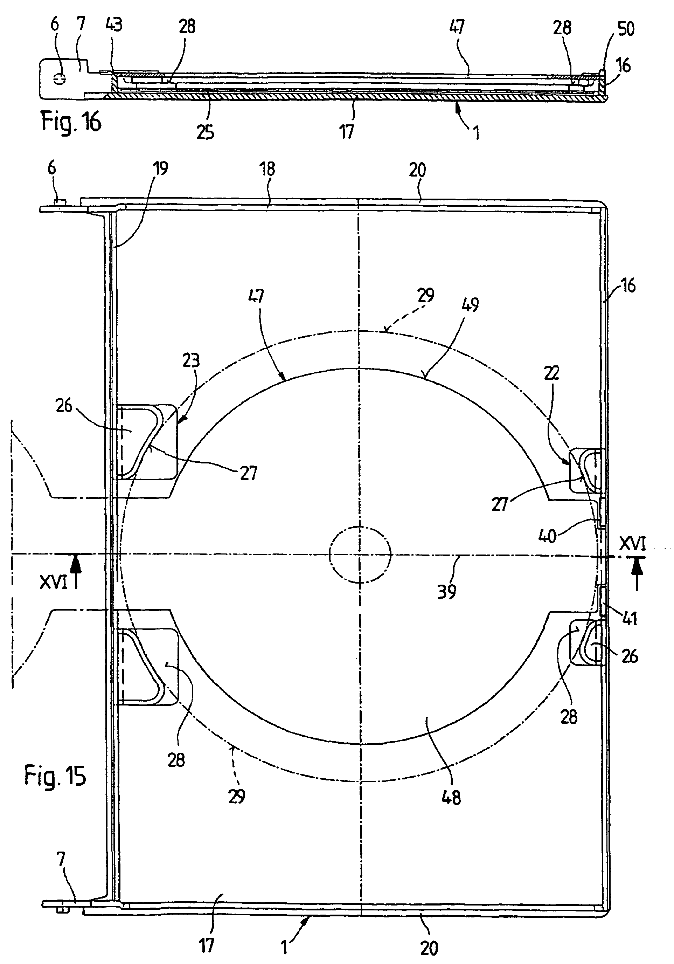

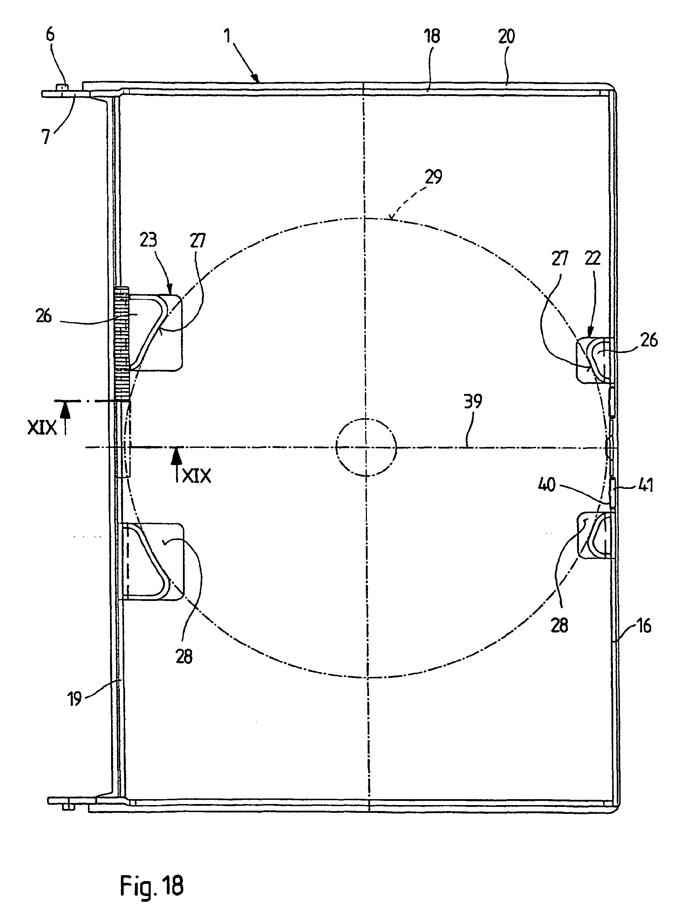

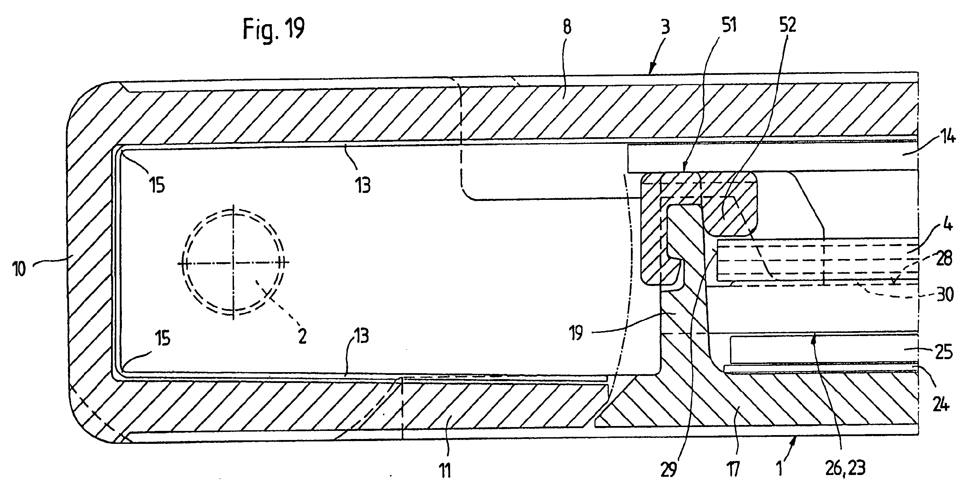

Die voranstehend beschriebenen Figuren 1 bis 12 beziehen sich auf eine erste Variante der Aufbewahrungskassette. Weitere Varianten erfindungsgemäßer Aufbewahrungskassetten werden nachfolgend anhand der weiteren Figuren 13 bis 19 erläutert, wobei die Figur 13 die zweite Variante, Figur 14 die dritte Variante, die Figuren 15 bis 17 die vierte Variante und die Figuren 18 und 19 die fünfte Variante darstellen.

Die zweite Variante gemäß Figur 13 unterscheidet sich von der ersten Variante gemäß den Figuren 1 bis 12 durch eine andere federnde Befestigung der Informationsplatte 4. Diese andere Art der federnden Befestigung kann sowohl im Bereich der Mitte der Stirnwand 16, als auch im Bereich der Mitte der Rückwand 19 des Basisteils 1 angewendet werden. In Figur 13 ist diese Befestigungsart am Beispiel der Rückwand 19 dargestellt.

Die Befestigung besteht aus einem ähnlich wie das Rastelement 34 nach der ersten Ausführungsform gestalteten federnden Rastelement 34', welches hier Bestandteil der Rückwand 19 ist und sich genau auf dessen Mitte zwischen den Halteelementen 23 bzw. Konsolen 26 befindet Zu der Informationsplatte 4 hin ist an dem federnden Rastelement 34' eine Rastnase 36' angeformt. Die Rastnase 36' stützt sich mit einer nach unten gerichteten Schräge 37' auf der Oberkante des Randes 29 der Informationsplatte 4 ab. Auch nach oben hin schließt sich an die Rastnase 36' eine Schräge 38' an. Beide Schrägen 37', 38' des Rastelementes 34' sind so gestaltet, daß sich jener Wandabschnitt der Rückwand 19, an dem das Rastelement 34' angeformt ist, federnd nach außen biegt, sobald die Informationsplatte 4 unter gewisser Druckanwendung in die Halteelemente eingesetzt oder herausgenommen wird.

Damit der das Rastelement 34 aufweisende Mittelabschnitt der Rückwand 19 entsprechend nach außen federn kann, ist dieser Bereich der Rückwand 19 nahe des Übergangs zu der Bodenplatte 17 des Basisteils mit einem durchgehenden Schlitz 19' versehen. Die Länge dieses Schlitzes 19' beträgt vorzugsweise die Hälfte bis ein Drittel der Gesamtlänge der Rückwand 19 zwischen den beiden Seitenwänden 18. Infolge des sich parallel zu der Bodenplatte 17 erstreckenden Schlitzes 19' kann der oberhalb des Schlitzes 19' angeordnete Mittelabschnitt der Rückwand 19 nach außen, d. h. von der Informationsplatte 4 weg federn, wodurch die Rastnase 36' des Rastelementes 34' in der bereits beschriebenen Weise die Informationsplatte freigibt.

Auch auf der gegenüberliegenden Seite, d. h. im Bereich der Stirnwand 16 des Basisteils, kann anstelle der in den Figuren 1 bis 12 beschriebenen Anordnung ein entsprechender federnder Schlitz in der Stirnwand 16 vorgesehen sein, der in Funktion und Aussehen dem Schlitz 19' entspricht.

Um das Rastelement 34' bei geschlossener Aufbewahrungskassette daran zu hindern, die Informationsplatte 4 freizugeben, ist an der Deckelplatte 8 eine Verriegelungsrippe 8' angeformt. Die Verriegelungsrippe 8' ist mit einem der Compact Disc zugewandten Rand 8" versehen, der bei geschlossener Kassette entweder an dem federnden Mittelabschnitt der Rückwand 19 anliegt, oder diesem mit nur geringem Abstand gegenüberliegt, wie dies Figur 13 erkennen läßt. Solange also die Aufbewahrungskassette geschlossen ist, kann der Mittelabschnitt mit dem Rastelement 34' nicht nach außen federn und damit versehentlich die Compact Disc freigeben.

Die dritte Variante gemäß Figur 14 unterscheidet sich von den beiden ersten Varianten gemäß den Figuren 1 bis 12 bzw. 13 durch die andere Ausbildung jenes Haltemittels, welches bei den Figuren 1 bis 13 durch das Rastelement 34 bzw. 34' gebildet wird. Anstelle eines solchen Rastelementes ist gemäß Figur 14 eine Klappe 42 vorgesehen, die über ein einstückig angeformtes Filmscharnier 43 an der Stirnwand 16 angelenkt ist, und zwar symmetrisch zu der Mittelachse 39 des Basisteils. Die Klappe 42 befindet sich also dort, wo sich bei den beiden bisher beschriebenen Varianten das federnde Rastelement befindet. Die Klappe 42 läßt sich um das als Gelenk dienende Filmscharnier 43 aus der gezeichneten Lage in die in Figur 14 strichpunktiert dargestellte Lage verschwenken. Die in ausgezogenen Linien dargestellte Lage gibt die Schließstellung wieder. Hierbei erstreckt sich die Klappe über einen Randbereich der Compact Disc 4, wodurch die Compact Disc 4 in diesem Bereich nicht von dem Halteelement 22 nach oben abheben kann. Strichpunktiert dargestellt ist die Klappe 42 in Öffnungsstellung, in der sich die Klappe vollständig außerhalb des durch den Rand 29 definierten Umfangs der Compact Disc 4 befindet.

Der Klappe 42 gegenüberliegend ist wiederum ein Haltenocken 35 in der Rückwand 19 angeformt, der sich weitgehend starr verhält

Das Basisteil nach Figur 14 besteht vorzugsweise aus Polyethylenterephthalat (PET), da ein solches Material die Anformung des Filmscharniers 34 ermöglicht, ohne daß dieses infolge oftmaliger Benutzung aufgrund zunehmender Versprödung bricht. Die Klappe 42 weist die Gestalt eines L-förmigen Winkels auf, dessen kurzer Schenkel 44 sich im wesentlichen parallel zu der Stirnwand 16 erstreckt, wohingegen der längere Schenkel 45 sich parallel zur Oberseite der Compact Disc 4 erstreckt bzw. auf dieser aufliegen kann.

An den schmalen Stirnflächen ist die Klappe 42 mit Nocken 46 versehen. Deren gegenseitiger Abstand ist etwas größer als die zur Aufnahme der Klappe 42 dienende Aussparung 50 in der Stirnwand 16 einrasten. Auf diese Weise können die Nocken 46, sobald die Klappe 42 die in Figur 14 dargestellte Schließstellung einnimmt, hinter den betreffenden Kanten der Stirnwand 16 einrasten. Die Klappe 42 läßt sich daher nur entgegen einem gewissen Widerstand in die Öffnungsstellung verschwenken, um daraufhin die Compact Disc 4 aus dem Basisteil zu entnehmen.

Auch bei der vierten Variante des Basisteils gemäß den Figuren 15 bis 17 ist als zusätzliches Haltemittel, welches ein Abheben der Compact Disc 4 verhindert, eine Klappe 47 vorgesehen. Diese ist jedoch so lang, daß sie sich in Schließstellung wie ein Deckel über die gesamte Informationsplatte 4 erstreckt.

Insbesondere weist der zentrale Bereich der Klappe 47 einen Deckel 48 auf, der sich in der in den Figuren 15 bis 17 dargestellten Schließstellung koaxial zu der darunter angeordneten Informationsplatte 4 befindet, wobei der Deckel 48 einen geringeren Durchmesser aufweist als die Informationsplatte 4. Dies läßt besonders gut die Figur 15 erkennen, in der der Rand 49 des Deckels 48 eingezeichnet ist.

Die Klappe 47 ist an ihrem einen Ende mittels des Filmschamiers 43 mit der Rückwand 19 verbunden. An ihrem anderen Ende kann sich die Klappe 47 in die mittige Aussparung 50 der Stirnwand 16 hineinlegen. Selbstverständlich können die beiden Enden der deckelförmigen Klappe 47 auch vertauscht sein, d. h. das Filmschamier kann sich in der Stirnwand 16 und die Aussparung zur Aufnahme des anderen Endes der Klappe in der Rückwand 19 befinden. Auch das Basisteil nach den Figuren 15 bis 17 besteht vorzugsweise aus Polyethylenterephthalat.

Bei der fünften Variante gemäß den Figuren 18 und 19 schließlich wird das zusätzliche Haltemittel durch ein Schiebestück 51 gebildet, welches translatorisch entlang der Rückwand 19 des Basisteils 1 geführt ist. Dabei ist das Schiebestück 51 zwischen zwei Endpositionen hin- und herbeweglich. In der einen Endposition, welche in Figur 18 dargestellt ist, befindet sich ein an dem Schiebestück 51 ausgebildeter Verriegelungsabschnitt außerhalb des durch den äußeren Rand 29 definierten Umfangs der Informationsplatte 4. In der anderen Endposition hingegen, die besser aus Figur 19 hervorgeht, gelangt der Verriegelungsabschnitt 52 über den Rand 29 der Informationsplatte 4, wodurch diese nicht von den Stützflächen 28 abheben kann. Vorzugsweise befindet sich das Schiebestück 51 nur an einer der beiden Wände des Basisteils, d. h. entweder, wie auf der Zeichnung dargestellt, an der Rückwand 19, oder aber an der gegenüberliegenden Stirnwand 16. An der jeweils gegenüberliegenden Wand reicht es aus, einen Haltenocken 35 starr anzuformen. Dieser kann wie der Haltenocken 35 nach Figur 7 oder der Haltenocken 35 nach Figur 14 geformt sein. Die Oberseite des Schiebestücks 41 ist mit einer Riffelung versehen, um das Entriegeln, etwa mittels des Daumens, zu erleichtern.

### Bezugszeichenliste

- 1: Basisteil
- 2: Scharnier
- 3: Deckelteil
- 4: Informationsplatte, Compact Disc
- 5: Loch
- 6: Stift
- 7: Steg
- 8: Deckelplatte
- 8': Verriegelungsrippe
- 8": Rand
- 9-: Seitenwand
- 10: Rückwand
- 11: untere Wand
- 12: Lasche
- 13: Informationsblatt
- 14: Begleitheft
- 15: Knickstelle
- 16: Stirnwand
- 17: Bodenplatte
- 18: Seitenwand
- 19: Rückwand
- 19': Schlitz
- 20: Bodenüberstand
- 21: Vertiefung
- 22: Halteelement
- 23: Halteelement
- 24: Informationsblatt
- 25: Begleitheft
- 26: Konsole
- 27: Zentrierfläche
- 28: Stützfläche
- 29: äußerer Rand der Informationsplatte
- 30: Rippe
- 31: Einführschräge
- 32: Horizontalfläche
- 33: Spalt
- 34: Rastelement
- 34': Rastelement
- 35: Haltenocken
- 36: Rastnase
- 36': Rastnase
- 37: Schräge
- 37': Schräge
- 38: Schräge
- 38': Schräge
- 39: Mittelachse
- 40: Rastmittel
- 41: Lasche
- 42: Klappe
- 43: Filmschamier
- 44: kurzer Schenkel
- 45: längerer Schenkel
- 46: Nocken
- 47: Klappe
- 48: Deckel
- 49: Rand des Deckels
- 50: Aussparung
- 51: Schiebestück
- 52: Verriegelungsabschnitt

- B: Breite des Kreissegments

## Patentansprüche

1. Verschließbare Aufbewahrungskassette für eine kreisförmige Informationsplatte, insbesondere eine digitale Informationen speichernde Compact Disc, mit in dem Innenraum der Aufbewahrungskassette angeordneten Halteelementen für die Informationsplatte, wobei die Halteelemente die Informationsplatte an einem daran konzentrisch ausgebildeten Rand halten,
wobei sämtliche Halteelemente (22, 23) um den kreisförmigen äußeren Rand (29) der Informationsplatte (4) herum angeordnet sind, und wobei die Halteelemente (22, 23) dafür geeignet sind, eine von außen nach innen gerichtete Haltekraft auf den Rand (29) auszuüben, **gekennzeichnet durch** ein die Informationsplatte (4) aufnehmendes Basisteil (1) und ein Deckelteil (3) zum Verschließen der Kassette, wobei das Basisteil (1) über eine rechteckige Bodenplatte (17) und von der Bodenplatte (17) in Richtung auf das Deckelteil (3) abstehende Wände (16, 19) verfügt, an denen die Halteelemente (22, 23) über Konsolen (26) angeformt sind, die sich, ausgehend von der jeweiligen Wand (16 bzw. 19), bis über die Bodenplatte (17) erstrecken.

2. Aufbewahrungskassette nach Anspruch 1, **dadurch gekennzeichnet, daß** die von außen nach innen gerichtete Haltekraft durch Zentrierflächen (27) an den Halteelementen (22,23) ausgeübt wird, und daß die Zentrierflächen (27) die Gestalt eines Kreissegments haben, dessen Krümmung gleich der Krümmung des Randes (29) der Informationsplatte (4) ist.

3. Aufbewahrungskassette nach Anspruch 1 oder Anspruch 2, **dadurch gekennzeichnet, daß** an den Halteelementen (22, 23) parallel zu der Informationsplatte (4) sich erstreckende Stützflächen (28) ausgebildet sind, auf denen die Informationsplatte (4) mit dem Rand ihrer einen Flachseite aufliegt.

4. Aufbewahrungskassette nach Anspruch 3, **dadurch gekennzeichnet, daß** die Stützflächen (28) die Gestalt eines gebogenen Kreissegments haben, dessen Biegung im wesentlichen gleich der Krümmung des Randes (29) der Informationsplatte (4) ist.

5. Aufbewahrungskassette nach Anspruch 2 in Verbindung mit einem der Ansprüche 3 oder 4, **dadurch gekennzeichnet, daß** die Zentrierflächen- (27) einstückig mit den Stützflächen (28) geformt sind und im rechten Winkel zu den Stützflächen (28) stehen.

6. Aufbewahrungskassette nach Anspruch 1, **dadurch gekennzeichnet, daß** die Konsolen (26) mit den Halteelementen (22, 23) im Abstand von der Oberseite der Bodenplatte (17) angeordnet sind und daß dieser Abstand Teil eines rechteckigen Freiraums für ein Informationsblatt (24) und/oder Begleitheft (25) ist.

7. Aufbewahrungskassette nach Anspruch 6, **dadurch gekennzeichnet, daß** der Freiraum durch die Wände des Basisteils begrenzt wird und in Richtung der Haupterstreckung der Konsolen (26) so groß ist wie der Durchmesser der Informationsplatte (4), und in Richtung quer hierzu größer ist als der Durchmesser der Informationsplatte (4).

8. Aufbewahrungskassette nach Anspruch 1, **dadurch gekennzeichnet, daß** sich das Deckelteil (3) aus einer Deckelplatte (8) und Seitenwänden (9, 10) entlang zumindest eines Teils der Ränder der Deckelplatte zusammensetzt, und daß an zumindest zwei einander gegenüberliegenden Seitenwänden (9) Laschen (12) angeformt sind, zwischen denen und der Innenfläche der Deckelplatte (8) ein Informationsblatt (13) und/oder ein Begleitheft (14) einsetzbar ist, dessen Größe gleich der Größe der gesamten Kassette abzüglich der Dicke der Seitenwände ist.

9. Aufbewahrungskassette nach einem der vorangehenden Ansprüche, **dadurch gekennzeichnet, daß** das Basisteil (1) und das hierzu über ein Scharnier (2) verschwenkbarer Deckelteil (3) zum Verschließen mit ineinandergreifenden Rastmitteln (40) versehen sind, und daß sich die Rastmittel (40) im Bereich der Mitte jenes Randes der Aufbewahrungskassette befinden, der der Scharnierseite gegenüberliegt.

10. Aufbewahrungskassette nach einem der vorangehenden Ansprüche; **gekennzeichnet durch** ein zusätzliches Haltemittel (34, 42, 47, 51), welches bis über mindestens den Rand (29) der Informationsplatte (4) vorspringt:

11. Aufbewahrungskassette nach Anspruch 10, **dadurch gekennzeichnet, daß** das zusätzliche Haltemittel (34, 42, 47, 51) räumlich getrennt von der Anordnung der Halteelemente (22, 23) ist.

12. Aufbewahrungskassette nach einem der Ansprüche 10 und 11, **dadurch gekennzeichnet, daß** an dem dem Haltemittel (34, 42, 51) gegenüberliegenden Umfangsabschnitt der Informationsplatte (4) ein bis über die Informationsplatte (4) vorspringender Haltenocken (35) starr angeordnet ist.

13. Aufbewahrungskassette nach Anspruch 12, **dadurch gekennzeichnet, daß** der Haltenocken (35) Teil einer Rückwand (19) des die Informationsplatte (4) aufnehmenden Basisteils (1) der Aufbewahrungskassette ist.

14. Aufbewahrungskassette nach einem der Ansprüche 10 bis 13, **dadurch gekennzeichnet, daß** das zusätzliche Haltemittel ein federndes Rastelement (34) ist, welches am äußeren Rand (29) der Informationsplatte (4) angeordnet und mit einer in Richtung auf die Informationsplatte (4) bis über die Informationsplatte (4) vorspringenden Rastnase (36) versehen ist, wobei sich die Rastnase (36) mit einer nach unten gerichteten Schräge (37) auf der Oberkante des Randes (29) der Informationsplatte (4) abstützt.

15. Aufbewahrungskassette nach Anspruch 14, **dadurch gekennzeichnet, daß** das Rastelement (34) Bestandteil einer Wand (16, 19) ist, die senkrecht auf einer rechteckigen Bodenplatte (17) steht und daß die Wand (16, 19) unterhalb des Rastelementes (34) und nahe ihres Übergangs zu der Bodenplatte (17) mit einem durchgehenden Schlitz (19') versehen ist, der sich parallel zu der Bodenplatte (17) erstreckt.

16. Aufbewahrungskassette nach einem der Ansprüche 10 bis 13, **dadurch gekennzeichnet, daß** das zusätzliche Haltemittel eine um ein Gelenk (43) schwenkbare Klappe (42, 47) ist, die aus einer Schließstellung, in der sich die Klappe (42, 47) über die Informationsplatte (4) erstreckt, bis in eine Öffnungsstellung verschwenkbar ist, in der sich die Klappe (42, 47) vollständig außerhalb des Umfangs der Informationsplatte (4) befindet.

17. Aufbewahrungskassette nach Anspruch 16, **dadurch gekennzeichnet, daß** die Klappe (42) kurz im Vergleich zum Durchmesser der Informationsplatte (4) ist und nur bis über einen Randbereich der Informationsplatte (4) vorspringt.

18. Aufbewahrungskassette nach Anspruch 16, **dadurch gekennzeichnet, daß** die Klappe (47) länger ist als der Durchmesser der Informationsplatte (4), und daß die Klappe (47) vorzugsweise mit einem runden Deckel (48) versehen ist, der sich in der Schließstellung koaxial zu der Informationsplatte (4) befindet und einen geringeren Durchmesser aufweist als die Informationsplatte (4).

19. Aufbewahrungskassette nach einem der Ansprüche 16 bis 19, **gekennzeichnet durch** ein einstückig angeformtes Filmschamier (43) als Gelenk.

20. Aufbewahrungskassette nach einem der Ansprüche 10 bis 13, **dadurch gekennzeichnet, daß** das zusätzliche Haltemittel ein in einer Ebene parallel zu der Informationsplatte (4) zwischen zwei Endpositionen hin- und herbewegliches Schiebestück (51) ist, und daß an dem Schiebestück (51) ein Verriegelungsabschnitt (52) ausgebildet ist, der in der einen Endposition über den Rand (29) der Informationsplatte (4) vorspringt und der sich in der anderen Endposition außerhalb des Umfangs der Informationsplatte (4) befindet.

21. Aufbewahrungskassette nach Anspruch 20, **dadurch gekennzeichnet, daß** das Schiebestück (51) verschiebbar entlang der Rückwand (19) oder entlang der Stirnwand (16) des Basisteils (1) geführt ist.

22. Aufbewahrungskassette nach einem der vorangehenden Ansprüche, **dadurch gekennzeichnet, daß** das Basisteil (1) aus Polyethylenterephthalat besteht.

## Claims

1. Closable storage box for a circular information disc, in particular a compact disc which stores digital information, comprising holding elements for the information disc which are arranged in the interior of the storage box, wherein the holding elements hold the information disc at an edge formed concentrically thereon, wherein all the holding elements (22, 23) are arranged around the circular outer edge (29) of the information disc (4), and wherein the holding elements (22, 23) are able to exert a holding force on the edge (29), said holding force being directed from the outside in, **characterized by** a base part (1) which accommodates the information disc (4) and a cover part (3) for closing the box, wherein the base part (1) has a rectangular base plate (17) and walls (16, 19) projecting from the base plate (17) towards the cover part (3), on which walls the holding elements (22, 23) are integrally formed above brackets (26) which, starting from the respective wall (16 or 19), extend over the base plate (17).

2. Storage box according to Claim 1, **characterized in that** the holding force directed from the outside in is exerted by centring faces (27) on the holding elements (22, 23), and **in that** the centring faces (27) have the shape of a circular segment, the curvature of which is the same as the curvature of the edge (29) of the information disc (4).

3. Storage box according to Claim 1 or Claim 2, **characterized in that** support faces (28) which extend parallel to the information disc (4) are formed on the holding elements (22, 23), against which support faces the information disc (4) bears with the edge of its flat side.

4. Storage box according to Claim 3, **characterized in that** the support faces (28) have the shape of a curved circular segment, the curve of which is essentially the same as the curvature of the edge (29) of the information disc (4).

5. Storage box according to Claim 2 in conjunction with either of Claims 3 and 4, **characterized in that** the centring faces (27) are formed in one piece with the support faces (28) and are oriented at right angles to the support faces (28).

6. Storage box according to Claim 1, **characterized in that** the brackets (26) with the holding elements (22, 23) are arranged at a distance from the upper side of the base plate (17), and **in that** this distance forms part of a rectangular clearance for an information sheet (24) and/or an accompanying booklet (25).

7. Storage box according to Claim 6, **characterized in that** the clearance is delimited by the walls of the base part and is as large as the diameter of the information disc (4) in the main direction of extension of the brackets (26) and is larger than the diameter of the information disc (4) in the direction transverse thereto.

8. Storage box according to Claim 1, **characterized in that** the cover part (3) is composed of a cover plate (8) and side walls (9, 10) along at least part of the edges of the cover plate, and **in that** lugs (12) are integrally formed on at least two opposite side walls (9), between which lugs and the inner face of the cover plate (8) an information sheet (13) and/or an accompanying booklet (14) can be inserted, the size thereof being equal to the size of the box as a whole minus the thickness of the side walls.

9. Storage box according to any of the preceding claims, **characterized in that** the base part (1) and the cover part (3) which can be pivoted with respect thereto via a hinge (2) are provided with catch means (40) which engage with one another for closure purposes, and **in that** the catch means (40) are located in the region of the centre of that edge of the storage box which lies opposite the hinge side.

10. Storage box according to any of the preceding claims, **characterized by** an additional holding means (34, 42, 47, 51) which protrudes over at least the edge (29) of the information disc (4).

11. Storage box according to Claim 10, **characterized in that** the additional holding means (34, 42, 47, 51) is spatially separate from the arrangement of the holding elements (22, 23).

12. Storage box according to either of Claims 10 and 11, **characterized in that** a holding cam (35) which protrudes over the information disc (4) is rigidly arranged at the circumferential section of the information disc (4) which lies opposite the holding means (34, 42, 51).

13. Storage box according to Claim 12, **characterized in that** the holding cam (35) forms part of a rear wall (19) of the base part (1) of the storage box which accommodates the information disc (4).

14. Storage box according to any of Claims 10 to 13, **characterized in that** the additional holding means is a flexible catch element (34) which is arranged at the outer edge (29) of the information disc (4) and is provided with a latching protrusion (36) which protrudes in the direction of the information disc (4) and over the information disc (4), wherein the latching protrusion (36) rests with a downwardly sloping face (37) against the upper side of the edge (29) of the information disc (4).

15. Storage box according to Claim 14, **characterized in that** the catch element (34) forms part of a wall (16, 19) which is perpendicular to a rectangular base plate (17), and **in that** the wall (16, 19) is provided with a through-slot (19') below the catch element (34) and close to its transition to the base plate (17), said slot extending parallel to the base plate (17).

16. Storage box according to any of Claims 10 to 13, **characterized in that** the additional holding means is a flap (42, 47) which can be pivoted about an articulation (43), which flap can be pivoted from a closed position in which the flap (42, 47) extends over the information disc (4) to an open position in which the flap (42, 47) is located fully outside the circumference of the information disc (4).

17. Storage box according to Claim 16, **characterized in that** the flap (42) is short compared to the diameter of the information disc (4) and protrudes only over an edge region of the information disc (4).

18. Storage box according to Claim 16, **characterized in that** the flap (47) is longer than the diameter of the information disc (4), and **in that** the flap (47) is preferably provided with a round cover (48) which in the closed position is coaxial to the information disc (4) and has a smaller diameter than the information disc (4).

19. Storage box according to any of Claims 16 to 18, **characterized by** an integrally formed-on film hinge (43) as the articulation.

20. Storage box according to any of Claims 10 to 13, **characterized in that** the additional holding means is a sliding piece (51) which can be moved back and forth between two end positions in a plane parallel to the information disc (4), and **in that** a locking section (52) is formed on the sliding piece (51), which locking section in one end position protrudes over the edge (29) of the information disc (4) and in the other end position is located outside the circumference of the information disc (4).

21. Storage box according to Claim 20, **characterized in that** the sliding piece (51) is guided displaceably along the rear wall (19) or along the front wall (16) of the base part (1).

22. Storage box according to any of the preceding claims, **characterized in that** the base part (1) is made of polyethylene terephthalate.

## Revendications

1. Cassette de rangement refermable pour un disque d'information circulaire, notamment un disque compact de stockage d'information numérique, avec des éléments de maintien pour le disque d'information disposés à l'intérieur de la cassette, lesdits éléments de maintien maintenant le disque d'information sur un bord concentrique formé contre lui, tous les éléments de maintien (22, 23) étant disposés autour du bord circulaire extérieur (29) du disque d'information (4), et les éléments de maintien (22, 23) étant aptes à exercer une force de maintien dirigée de l'extérieur vers l'intérieur sur le bord (29), **caractérisée par** une pièce de base (1) recevant le disque d'information (4) et une pièce de couvercle (3) pour la fermeture de la cassette, la pièce de base (1) disposant d'une plaque de fond (17) rectangulaire et de parois (16, 19) s'élevant de la plaque de fond (17) vers la pièce de couvercle (3), contre lesquelles les éléments de maintien (22, 23) sont formés par des consoles (26) s'étendant depuis la paroi correspondante (16 ou 19) jusqu'au-dessus de la plaque de fond (17).

2. Cassette de rangement selon la revendication 1, **caractérisée en ce que** la force de maintien dirigée de l'extérieur vers l'intérieur est exercée par des surfaces de centrage (27) sur les éléments de maintien (22, 23), et **en ce que** les surfaces de centrage (27) sont en forme d'arc de cercle, dont la courbure est similaire à la courbure du bord (29) du disque d'information (4).

3. Cassette de rangement selon la revendication 1 ou 2, **caractérisée en ce que** des surfaces d'appui (28) sont formées sur les éléments de maintien (22, 23), s'étendant parallèlement au disque d'information (4), sur lesquelles le disque d'information (4)- repose par le bord de sa première face plate.

4. Cassette de rangement selon la revendication 3, **caractérisée en ce que** les surfaces d'appui (28) sont en forme d'arc de cercle cintré, dont la courbure est substantiellement similaire à la courbure du bord (29) du disque d'information (4).

5. Cassette de rangement selon la revendication 2 associée à une des revendications 3 ou 4, **caractérisée en ce que** les surfaces de centrage (27) sont formées d'une pièce avec les surfaces d'appui (28) et sont à angle droit avec les surfaces d'appui (28).

6. Cassette de rangement selon la revendication 1, **caractérisée en ce que** les consoles (26) avec les éléments de maintien (22, 23) sont disposées à distance de la face supérieure de la plaque de fond (17), et **en ce que** cet intervalle fait partie d'un espace de dégagement rectangulaire pour une feuille d'informations (24) et/ou une brochure jointe (25).

7. Cassette de rangement selon la revendication 6, **caractérisée en ce que** l'espace de dégagement est délimité par les parois de la pièce de base et est de grandeur équivalente au diamètre du disque d'information (4) dans le sens d'extension principale des consoles (26), et de grandeur supérieure au diamètre du disque d'information (4) dans le sens transversal au précédent.

8. Cassette de rangement selon la revendication 1, **caractérisée en ce que** la pièce de couvercle (3) se compose d'une plaque de couvercle (8) et de parois latérales (9, 10) le long d'une partie au moins des bords de la plaque de couvercle, et **en ce que** des languettes (12) sont formées sur deux parois latérales (9) opposées au moins, une feuille d'informations (13) et/ou une brochure jointe (14) étant insérables entre celles-ci et la surface intérieure de la plaque de couvercle (8), dont la grandeur est identique à celle de toute la cassette moins l'épaisseur des parois latérales.

9. Cassette de rangement selon l'une des revendications précédentes, **caractérisée en ce que**, pour la fermeture, la pièce de base (1) et la pièce de couvercle (3) pivotant à cet effet au moyen d'une charnière (2) sont munies d'éléments d'encliquetage (40) s'engageant les uns dans les autres, et **en ce que** les éléments d'encliquetage (40) se trouvent dans la région centrale du bord de la cassette de rangement opposé au côté de la charnière.

10. Cassette de rangement selon l'une des revendications précédentes, **caractérisée par** un élément de maintien supplémentaire (34, 42, 47, 51), lequel dépasse au moins du bord (29) du disque d'information (4).

11. Cassette de rangement selon la revendication 10, **caractérisée en ce que** l'élément de maintien supplémentaire (34, 42, 47, 51) est spatialement séparé du dispositif des éléments de maintien (22, 23).

12. Cassette de rangement selon l'une des revendications 10 et 11, **caractérisée en ce qu'**un ergot de maintien (35) saillant jusqu'au-dessus du disque d'information (4) est fixement disposé sur le segment de circonférence du disque d'information (4) opposé à l'élément de maintien (34, 42, 51).

13. Cassette de rangement selon la revendication 12, **caractérisée en ce que** l'ergot de maintien (35) fait partie d'une paroi arrière (19) de la pièce de base (1) de la cassette de rangement où est logé le disque d'information (4).

14. Cassette de rangement selon l'une des revendications 10 à 13, **caractérisée en ce que** l'élément de maintien supplémentaire est un élément d'encliquetage élastique (34), disposé contre le bord extérieur (29) du disque d'information (4) et muni d'un bec d'encliquetage (36) saillant en direction du disque d'information (4) jusqu'au-dessus du disque d'information (4), ledit bec d'encliquetage (36) s'appuyant sur le sommet du bord (29) du disque d'information (4) par un biseau (37) dirigé vers le bas.

15. Cassette de rangement selon la revendication 14, **caractérisée en ce que** l'élément d'enclenchement (34) fait partie d'une paroi (16, 19) se dressant verticalement au-dessus d'une plaque de fond (17) rectangulaire, et **en ce que** la paroi (16, 19) est munie d'une fente traversante (19') sous l'élément d'enclenchement (34) et à proximité de sa jonction avec la plaque de fond (17), ladite fente s'étendant parallèlement à la plaque de fond (17).

16. Cassette de rangement selon l'une des revendications 10 à 13, **caractérisée en ce que** l'élément de maintien supplémentaire est un volet (42, 47) pivotant autour d'une articulation (43), depuis une position de fermeture où le volet (42, 47) s'étend au-dessus du disque d'information (4) jusqu'à une position d'ouverture où le volet (42, 47) se trouve entièrement à l'extérieur de la circonférence du disque d'information (4).

17. Cassette de rangement selon la revendication 16, **caractérisée en ce que** le volet (42) est court par rapport au diamètre du disque d'information (4) et qu'il ne s'étend qu'au-dessus d'une zone de bord du disque d'information (4).

18. Cassette de rangement selon la revendication 16, **caractérisée en ce que** le volet (47) est plus long que le diamètre du disque d'information (4), et **en ce que** le volet (47) est préférentiellement pourvu d'un couvercle rond (48) disposé coaxialement au disque d'information (4) en position de fermeture, et présentant un diamètre inférieur à celui du disque d'information (4).

19. Cassette de rangement selon l'une des revendications 16 à 18, **caractérisée par** une charnière pelliculaire (43) formée d'une pièce en tant qu'articulation.

20. Cassette de rangement selon l'une des revendications 10 à 13, **caractérisée en ce que** l'élément de maintien supplémentaire est une pièce coulissante (51) déplaçable entre deux positions finales sur un plan parallèlement au disque d'information (4), et **en ce qu'**un segment de verrouillage (52) est formé sur la pièce coulissante (51), lequel fait saillie au-dessus du bord (29) du disque d'information (4) dans une première position finale, et se trouve en dehors de la circonférence du disque d'information (4) dans l'autre position finale.

21. Cassette de rangement selon la revendication 20, **caractérisée en ce que** la pièce coulissante (51) est guidée de manière à être déplaçable le long de la paroi arrière (19) ou le long de la paroi frontale (16) de la pièce de base (1).

22. Cassette de rangement selon l'une des revendications précédentes, **caractérisée en ce que** la pièce de base (1) est en polyéthylène-téréphtalate.
